# FASCICULE DE BREVET EUROPEEN

(11) **EP 0 565 443 B1**
(45) Date de publication et mention de la délivrance du brevet: **12.06.1996**
(21) Numéro de dépôt: 93400910.1
(22) Date de dépôt: 07.04.1993
(51) Int. Cl.: B60S 1/04, B60S 1/38

(54) **Dispositif d'essuie-glace incorporant un déflecteur**
Scheibenwischanlage mit Windableiter
Windscreen wiper incorporating a deflector

(30) Priorité: 08.04.1992 FR 9204295
(43) Date de publication de la demande: 13.10.1993
(73) Titulaire: VALEO SYSTEMES D'ESSUYAGE, 78321 La Verrière (FR)
(72) Inventeur: Schon, Wilfrid, F-63580 Saint Etienne/Usson (FR)
(74) Mandataire: Martin, Jean-Jacques

(56) Documents cités:
- EP-A- 0 234 286
- EP-A- 0 410 854
- WO-A-91/18772
- US-A- 3 685 086

## Description

La présente invention concerne le domaine des essuie-glace, destinés notamment à l'essuyage d'un pare-brise de véhicule automobile.

Il est connu de munir les essuie-glace de déflecteurs propres à dévier l'écoulement des flux d'air sur le pare-brise, en vue d'éviter que l'essuie-glace ne se soulève et ne s'écarte de la surface à essuyer à des vitesses élevées du véhicule.

De tels déflecteurs sont souvent montés à cet effet sur une armature de bras ou de balai d'essuie-glace et comportent un profilé qui crée un effort aérodynamique tendant à appliquer le balai contre la surface à essuyer.

Un déflecteur connu est décrit par exemple dans le document FR-A-2 621 288.

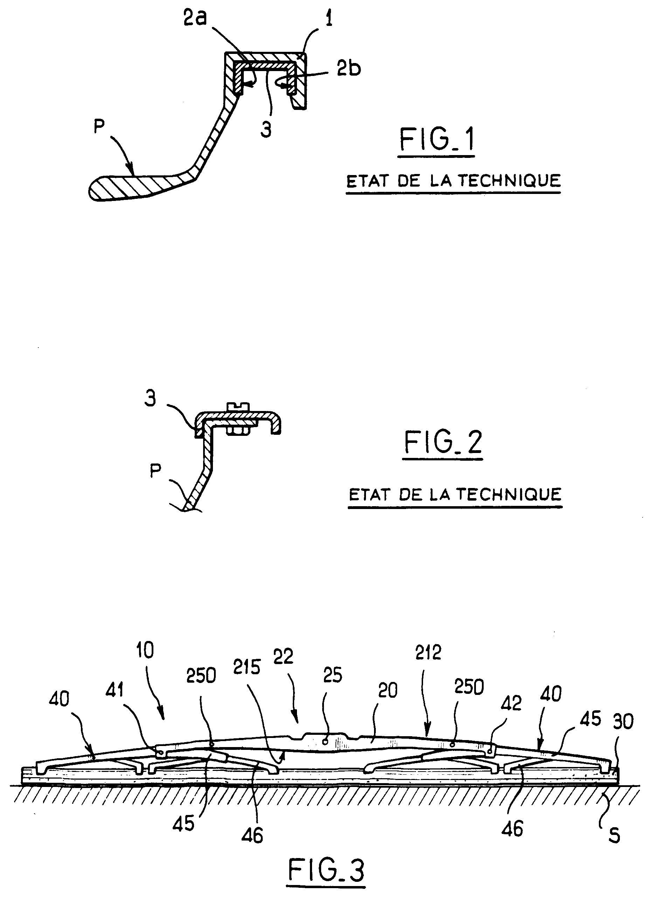

Ce document décrit un déflecteur présentant un profilé P, muni de moyens de montage 1 sur une armature 3 de balai, comme cela est visible sur la figure 1.

Les moyens de montage comportent des pinces 1 propres à s'encliqueter sur l'armature 3, lesdites pinces 1 ayant une section en U renversé, de manière à coiffer l'armature 3 de forme semblable et à se clipser sur les deux ailes 2a et 2b de celle-ci.

Il a également été proposé de fixer le profilé P par boulonnage sur l'armature 3, comme illustré sur la figure 2.

Cependant, ces deux types de moyens de montage connus ne donnent pas entièrement satisfaction.

Le remplacement d'un déflecteur muni de moyens de montage tels que précédemment décrits en référence à la figure 1 n'est pas facile et les pinces 1 peuvent être endommagées lors de cette opération.

Par ailleurs, il a été constaté par la Demanderesse que les fixations par boulonnage, soumises aux vibrations mécaniques du véhicule, tendent à se défaire.

On a proposé dans la publication EP-A-0 410 854 un dispositif d'essuie-glace comportant un bras et un balai d'essuie-glace, l'un au moins du bras ou du balai d'essuie-glace comprenant une armature en forme d'étrier, de section transversale en U renversé, présentant deux ailes latérales raccordées sur un dos. Ce dispositif connu comporte un déflecteur comprenant un profilé dont la surface externe est adaptée à dévier les flux d'air pour plaquer le balai sur la surface à essuyer. Le déflecteur présente une partie de montage à appliquer contre la surface externe d'une aile de l'armature, cette dernière étant munie d'éléments de retenue coopérant avec ladite partie de montage pour maintenir le déflecteur contre ladite aile de l'armature. Les éléments de retenue sont constitués par des pions et la partie de montage comporte des perçages oblongs dans lesquels sont engagés ces pions. Les perçages oblongs sont agencés de manière à autoriser un déplacement du profilé relativement à l'armature en fonction des variations de la courbure du pare-brise. Ce dispositif connu ne permet pas un montage aisé du déflecteur sur l'armature ni son remplacement indépendamment de l'armature.

La présente invention a pour objet un dispositif d'essuie-glace et un déflecteur améliorés, remédiant notamment aux inconvénients précités.

L'invention y parvient grâce aux caractéristiques énoncées dans la revendication 1.

Selon un mode de réalisation avantageux de l'invention, le rebord du déflecteur comporte des moyens de butée aptes à maintenir l'élément de retenue engagé dans ladite découpe, lesdits moyens de butée pouvant se déformer élastiquement en vue de permettre la libération de l'élément de retenue hors de la découpe.

De préférence, l'élément de retenue est un rivet à tête.

Avantageusement, le rebord du déflecteur s'étend longitudinalement sur toute la longueur du profilé, et a la forme générale d'une plaque plane allongée comportant à son extrémité supérieure une partie coudée, raccordée sur la surface interne du profilé.

Selon une caractéristique avantageuse, la découpe a la forme d'un "U", comportant une ouverture bordée par deux bords rectilignes raccordés a un fond en demi-cercle, apte à venir en appui avec ledit élément de retenue.

Selon une autre caractéristique avantageuse, les moyens de butée comportent au moins une languette souple sensiblement coplanaire avec ladite plaque plane et dont l'extrémité libre se prolonge au-delà de ladite plaque plane pour former un épaulement en saillie adapté pour venir en butée avec un bord libre de l'armature.

De préférence, la plaque plane comporte à sa partie supérieure des moyens élastiques aptes a exercer un couple de rappel tendant à maintenir les épaulements desdites languettes souples en butée contre le bord libre de l'armature.

Ces moyens élastiques comportent de préférence au moins une languette raccordée par un bord sur la plaque plane, faisant au repos un angle par rapport à celle-ci, apte à se rabattre élastiquement vers la plaque plane par appui sur l'aile.

L'invention a également pour objet un déflecteur d'essuie-glace destiné à équiper un bras ou un balai d'essuie-glace pour former un dispositif d'essuie-glace conforme à l'invention.

D'autres caractéristiques et avantages de l'invention apparaîtront à la lecture de la description détaillée qui va suivre, non limitative de l'invention, et au vu du dessin annexé sur lequel :
- les figures 1 et 2 illustrent des moyens de montage connus appartenant à l'état de la technique,
- la figure 3 est une vue schématique en élévation latérale d'un balai d'essuie-glace propre à être muni d'un déflecteur selon l'invention,
- la figure 4 est une vue partielle en perspective d'un déflecteur et d'une armature du balai munie d'un élément de retenue,
- la figure 4A illustre un détail de la figure 4,
- la figure 5 est une coupe transversale du déflecteur de la figure 4, monté sur une armature de balai munie d'un élément de retenue,
- les figures 6A à 6C illustrent les différentes étapes du montage d'un déflecteur et d'une armature conformes à l'invention.

Les figures 1 et 2 ont été précédemment décrites à titre d'illustration de l'état de la technique.

On se réfèrera dans la suite de la description à un dispositif d'essuie-glace comportant un bras et un balai d'essuie-glace muni d'une raclette destinée à être appliquée contre une surface à essuyer, le balai étant représenté sur la figure 3.

En se référant à cette figure, on voit un balai d'essuie-glace 10, destiné à être équipé d'un déflecteur conforme à l'invention. Ce balai comporte une armature 20, de forme allongée et ayant une section transversale en forme de "U" renversé, comprenant deux ailes latérales raccordées à angle droit sur un dos 212. Les ailes se terminent à leur extrémité libre opposée au dos 212 par un bord libre 215 plan, parallèle au dos 212. L'armature 20 est destinée à être portée, de façon connue, par un bras d'essuie-glace non représenté. A cet effet, le dos 212 est généralement ajouré dans une région médiane 22 de l'armature 20, et l'armature 20 comporte à ce niveau un tourillon transversal 25 s'étendant entre les ailes.

Ce tourillon 25 est destiné à être reçu dans un logement prévu à l'extrémité du bras d'essuie-glace, pour assurer une liaison articulée entre le bras et l'armature 20.

Le balai 10 comporte, en outre, une raclette 30, généralement en matière élastomère, au contact d'une surface à essuyer S.

Cette raclette 30 est portée par un système de palonniers 40, montés sur des articulations 41, 42 prévues aux extrémités de l'armature 20. Avantageusement, comme représenté, le système de palonniers 40 comprend un palonnier intermédiaire 45 portant, à chaque extrémité, de façon articulée, deux palonniers secondaires 46.

Le balai 10 est destiné à supporter un déflecteur conforme à l'invention. Pour ce faire, il est prévu des moyens de retenue 250 du déflecteur sur l'armature 20, qui vont être décrits de façon détaillée par la suite.

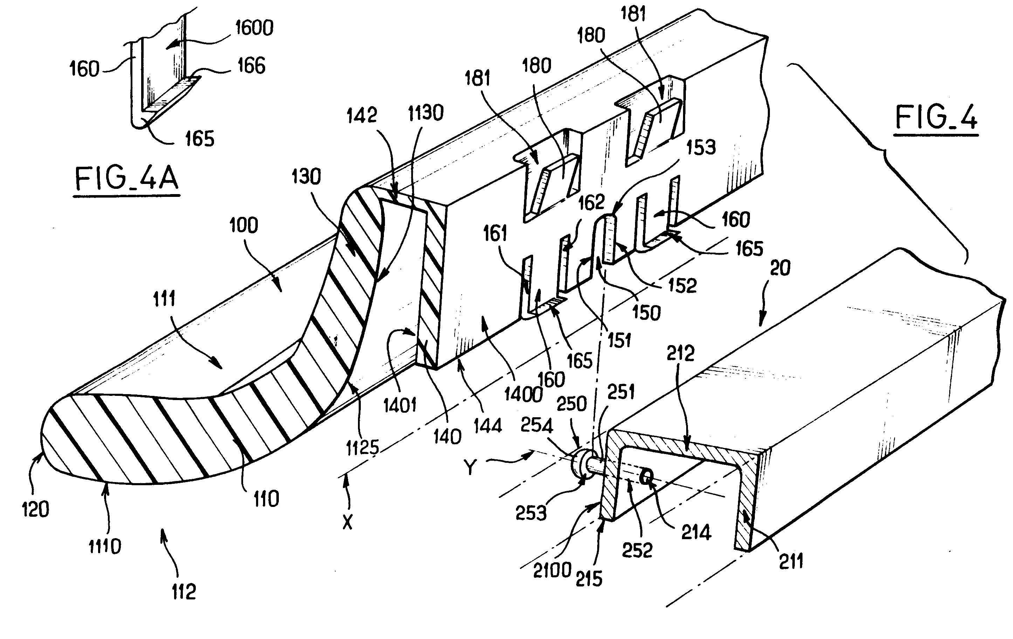

On a représenté en perspective sur les figures 4 et 4A un déflecteur 100 conforme à l'invention, propre à être monté sur une armature de balai 20, équipée de moyens de retenue 250.

Ce déflecteur comporte un profilé 110 de type connu en lui-même présentant une surface externe adaptée à dévier les flux d'air en vue d'exercer un effort aérodynamique de placage du balai 10 sur la surface à essuyer S.

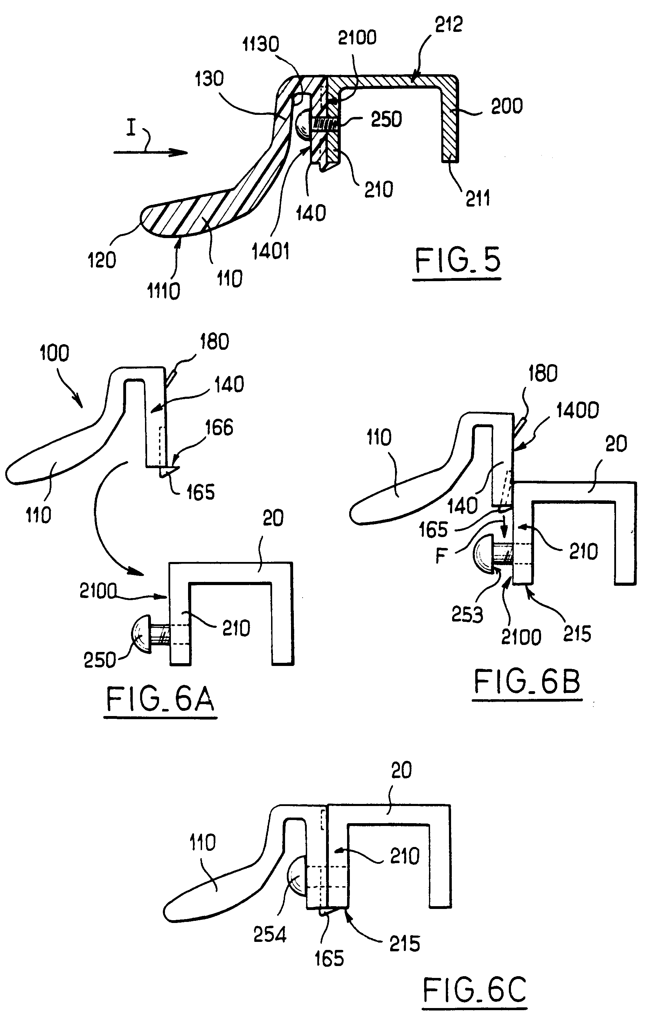

Le profilé 110 est allongé dans la direction d'un axe longitudinal et comporte une surface concave 111 tournée vers la direction d'incidence des flux d'air, schématisée par la flèche I sur la figure 5, sensiblement parallèle au plan de la surface à essuyer S.

Le profilé 110 comporte une surface convexe 112 tournée vers la partie à essuyer. Les surfaces concave 111 et convexe 112 se raccordent sur un bord avant 120, arrondi, convexe vers l'extérieur. La surface 112 comprend une première zone 1110 s'étendant à partir du bord avant 120 vers l'arrière, c'est-à-dire vers la raclette du balai, non représentée sur la figure 4. La première zone 1110 est prolongée vers le haut par rapport à la première, c'est-à-dire en éloignement de la surface à essuyer, par une région 1125 arrondie convexe vers l'extérieur, se raccordant sur une deuxième zone 1130, sensiblement plane et s'étendant dans une direction faisant un angle voisin de 90° avec la partie de la première zone 1110 adjacente au bord avant 120.

Le profilé 110 est de préférence réalisé dans un matériau rigide et sera avantageusement muni en son bord avant 120 d'un ou plusieurs bourrelets en caoutchouc susceptibles de s'interposer entre le profilé et la surface à essuyer aux vitesses élevées du véhicule.

De préférence, la longueur du déflecteur est telle que celui-ci abrite le plus possible la raclette des flux d'air incidents ; avantageusement, la longueur du déflecteur est sensiblement égale à la longueur de la raclette.

Les moyens mis en oeuvre, conformément à l'invention, pour le montage du déflecteur 100 sur l'armature 20 seront décrits en référence aux figures 4 et 5. Sur ces figures, les ailes de l'armature sont référencées 210 et 211.

Le déflecteur 100 comporte un rebord 140 destiné à s'appliquer par une face 1400 sur la face externe 2100 de l'aile 210 de l'armature.

Le rebord 140 présente la forme d'une plaque plane allongée dans la direction de l'axe X, de section sensiblement rectangulaire, raccordée à son extrémité supérieure par une partie coudée 142 sur la deuxième zone 1130 du profilé 110, de préférence à angle droit, de sorte que le rebord 140 s'étend parallèlement au plan de la deuxième zone 1130.

Le rebord 140 selon l'invention est muni d'au moins une découpe 150 débouchant sur son bord libre 144, parallèle à l'axe X. De préférence, le rebord 140 comprend deux découpes 150, disposées symétriquement de part et d'autre d'une zone médiane du déflecteur 100.

Chaque découpe 150 a de préférence la forme d'un "U", comportant deux bords parallèles 151, 152, qui se raccordent à angle droit sur le bord libre 144 reliés par un fond 153 en forme de demi-cercle, dont la concavité est tournée vers l'ouverture de la découpe 150.

Chaque découpe 150 est destinée à recevoir un élément de retenue 250 solidaire de l'armature 20.

Cet élément de retenue 250 peut faire l'objet de diverses variantes de réalisation. Dans la variante de réalisation préférée et représentée, l'élément de retenue 250 est un rivet à tête.

Ce rivet 250 comporte un tronc de section cylindrique 251 s'étendant selon un axe Y, engagé à une extrémité 252 dans un alésage 214 prévu sur l'aile 210 et raccordé à l'extrémité opposée sur une tête élargie 254. Avantageusement, le rivet 250 et l'armature 20 sont métalliques, et le rivet 250 est électrosoudé sur l'armature 20. De préférence, l'axe Y du tronc 251 s'étend perpendiculairement au plan de la face 2100 de l'aile 210. La tête élargie 254 comporte au niveau de sa jonction avec le tronc 251 une base 253 perpendiculaire à l'axe Y, donc parallèle au plan de la face 2100.

Conformément à une caractéristique de l'invention, la découpe 150 et l'élément de retenue 250 sont adaptés pour coopérer l'un avec l'autre ; à cet effet, la distance entre les bords 151, 152 est sensiblement égale au diamètre du tronc 251, tandis que le diamètre de la base 253 est nettement supérieur à cette distance, de façon à immobiliser axialement dans la direction de l'axe Y le déflecteur 100 par rapport à l'armature 20. En d'autres termes, l'élément de retenue maintient plaquées l'une contre l'autre les faces 1400 et 2100.

D'autres géométries de têtes 254 peuvent être utilisées, mais il convient de noter que la distance entre la base 253 de la tête 254 et la face 2100 doit correspondre à l'épaisseur du rebord 140 mesurée au niveau de la découpe 150. Ainsi, lorsque l'élément de retenue 250 est inséré par l'ouverture de la découpe 150, la base 253 prend appui sur la face 1401 du rebord 140 opposée à la face d'appui 1400, et maintient plaquée la face 1400 du rebord 140 contre la face 2100 de l'aile 210.

De préférence, la surface cylindrique du tronc 251 du rivet 250 repose contre le bord libre demi-circulaire 153 de la découpe 150.

Conformément à un mode de réalisation caractéristique avantageux, des moyens de butée sont prévus pour maintenir l'élément de retenue 250 dans la découpe 150. Ces moyens de butée sont constitués de préférence par des languettes 160 formées sur le rebord 140.

Avantageusement, chaque languette 160 est bordée par deux évidements rectilignes 161, 162 s'étendant perpendiculairement à l'axe X à partir du bord libre 144 sur une partie de la largeur du rebord 140.

Ces évidements 161, 162 s'étendent sur une largeur telle qu'ils confèrent à la languette 160 une flexibilité suffisante pour fléchir hors du plan de la face 1400, comme cela sera précisé dans la suite.

De préférence, comme représenté, on prévoit deux languettes 160 disposées de chaque côté d'une découpe 150.

Les languettes 160 comportent une face 1600 coplanaire avec la face 1400 du rebord.

Selon un mode de réalisation avantageux, les languettes 160 se prolongent au-delà du bord libre 144 pour former des épanouissements 165, faisant saillie perpendiculairement sur la face 1600, en éloignement du profilé 110.

En se référant plus précisément à la figure 4A, on voit que les épanouissements 165 forment un épaulement 166 se raccordant à angle droit sur la face 1600 des languettes, en vue de coopérer avec la face plane du bord libre 215 de l'aile 210.

L'épaisseur d'une languette 160 mesurée perpendiculairement à une face 1600 est de préférence moindre que l'épaisseur du rebord 140, en vue de conférer plus de flexibilité à la languette. L'épaisseur d'une languette 160 et la longueur des évidements rectilignes 161, 162 est choisie en fonction de la nature du matériau constituant le déflecteur, et des caractéristiques mécaniques requises.

Selon un mode de réalisation avantageux, le rebord 140 comporte de plus des moyens élastiques 180 prenant appui sur la partie supérieure de la face 2100, proche du dos 212, en vue d'exercer un couple tendant à presser le rebord des languettes adjacent à l'épaulement 166 contre le bord libre 215 de l'aile 210. Les moyens élastiques 180 sont avantageusement formés par des languettes flexibles 180 s'étendant hors du plan de la face 1400 du rebord 140. Chaque languette flexible 180 fait un angle avec le plan de la face 1400 compris entre 10 et 50°, et se raccorde à sa base sur un bord d'une fenêtre 181 débouchant sur la partie supérieure du rebord 140. En position fléchie, les languettes 180 sont susceptibles de se rabattre dans le plan de la face 1400. De préférence, comme représenté, chaque languette flexible 180 est disposée dans le prolongement d'une languette 160, selon une direction perpendiculaire à l'axe X.

Les différentes étapes du montage du déflecteur 100 sur l'armature 20 sont illustrées sur les figures 6A à 6C.

Tout d'abord, le déflecteur est positionné axialement par rapport à l'armature afin de placer en regard les ouvertures des découpes 150 et les troncs des rivets 250.

Puis la face 1400 du rebord 140 est appliquée contre la face 2100 de l'aile 210. Lors de cette opération, les épanouissements 165 prennent appui sur la face 2100 et les languettes 160 fléchissent en direction du profilé 110.

Ensuite, le rebord 140 est inséré dans le sens de la flèche F de la figure 6B entre la base 253 de la tête 254 du rivet 250 et la face 2100.

Finalement, la surface cylindrique du tronc 252 du rivet 250 vient en appui sur le bord libre demi-circulaire 153 de la découpe 150, tandis que les épaulements 166 des languettes atteignent le bord libre 215. Les languettes 160 reprennent leur position de repos, faces 1400 et 1600 coplanaires. Les épaulements 166 viennent en butée contre le bord 215, conformément à la figure 6C, et bloquent l'élément de retenue 250 dans la découpe 150.

Lors de cette opération, les languettes flexibles 180 se sont rabattues dans le plan de la face 1400 et exercent un couple de rappel dans le sens anti-horaire des figures 6A à 6C tendant à maintenir appliqués l'un contre l'autre le rebord d'une face 1600 adjacent à un épaulement 166 et le rebord de la surface 2100 adjacent au bord libre 215 de l'aile 210.

Pour démonter le déflecteur, on agit sur les épanouissements 165 des languettes 160 en les déplaçant en direction du profilé 110 jusqu'à ce que ceux-ci cessent de coopérer avec le bord libre 215, ce qui autorise un mouvement de translation du déflecteur perpendiculairement à l'axe X, dans le sens opposé à la flèche F de la figure 6B et permet de libérer la découpe 150 de l'emprise du rivet 250.

Finalement, un balai d'essuie-glace équipé d'un déflecteur conforme à l'invention se révèle particulièrement avantageux, notamment parce qu'il permet un démontage facile du déflecteur, sans risque d'endommagement pour ce dernier. On peut proposer en variante, sans sortir du cadre de l'invention, d'équiper non plus le balai d'essuie-glace d'un déflecteur conforme à l'invention mais le bras de l'essuie-glace, ou bien d'équiper les deux chacun d'un déflecteur.

Le rebord 140 peut être rapporté sur le profilé 110 ou venu de formation par moulage. Dans tous les cas, la structure du déflecteur est simple et peu coûteuse à réaliser.

## Revendications

1. Dispositif d'essuie-glace (10) comportant un bras et un balai d'essuie-glace, l'un au moins du bras ou du balai d'essuie-glace comprenant une armature (20) en forme d'étrier, de section transversale en U renversé, présentant deux ailes latérales (210, 211) raccordées sur un dos (212), le dispositif (10) comportant un déflecteur (100) comprenant un profilé (110) dont la surface externe est adaptée à dévier les flux d'air pour plaquer le balai sur la surface à essuyer, le déflecteur (100) présentant une partie de montage à appliquer contre la surface externe d'une aile (210) de l'armature, cette dernière étant munie d'au moins un élément de retenue (250) coopérant avec ladite partie de montage pour maintenir le déflecteur contre ladite aile (210) de l'armature, caractérisé en ce que la partie de montage comporte un rebord (140) présentant une découpe (150) débouchant sur un bord libre dudit rebord et dans laquelle est engagé ledit élément de retenue.

2. Dispositif d'essuie-glace selon la revendication 1, caractérisé en ce que ledit rebord comporte des moyens de butée aptes à maintenir l'élément de retenue engagé dans ladite découpe, lesdits moyens de butée pouvant se déformer élastiquement en vue de permettre la libération de l'élément de retenue hors de la découpe.

3. Dispositif d'essuie-glace selon la revendication 1 ou 2, caractérisé en ce que l'élément de retenue (250) est un rivet à tête.

4. Dispositif d'essuie-glace selon l'une des revendications 1 à 3, caractérisé en ce que le rebord (140) s'étend longitudinalement sur toute la longueur du profilé (110).

5. Dispositif d'essuie-glace selon l'une des revendications 1 à 4, caractérisé en ce que le rebord (140) a la forme générale d'une plaque plane allongée comportant à son extrémité supérieure une partie coudée (142), raccordée sur la surface interne (112) du profilé.

6. Dispositif d'essuie-glace selon l'une des revendications 1 à 5, caractérisé en ce que la découpe (150) a la forme d'un "U", comportant une ouverture bordée par deux bords rectilignes (151, 152) raccordés à un fond (153) en demi-cercle, apte à venir en appui avec ledit élément de retenue (250).

7. Dispositif d'essuie-glace selon l'une des revendications 1 à 6, caractérisé en ce que les moyens de butée (160) comportent au moins une languette souple (160) sensiblement coplanaire avec ladite plaque plane et dont l'extrémité libre se prolonge au-delà de ladite plaque plane pour former un épaulement (166) en saillie apte à venir en butée avec un bord libre (215) de l'armature (20).

8. Dispositif d'essuie-glace selon la revendication 7, caractérisé en ce que la plaque plane comporte à sa partie supérieure des moyens élastiques (180) aptes à exercer un couple de rappel tendant à maintenir les épaulements (166) en butée contre le bord libre (215) de l'armature (20).

9. Dispositif d'essuie-glace selon la revendication 8, caractérisé en ce que les moyens élastiques (180) comportent au moins une languette (180) raccordée par un bord sur la plaque plane, faisant au repos un angle par rapport à celle-ci, apte à se rabattre élastiquement vers la plaque plane par appui sur l'aile (210).

10. Déflecteur pour équiper un dispositif d'essuie-glace selon l'une des revendications 1 à 9.

## Claims

1. A windscreen wiper device (10) comprising an arm and a wiper blade, at least one of the arm or the wiper blade including an arcuate support member (20), having a cross-section in the form of an upside-down U, the support member having two lateral flanges (210, 211) joined together by a web (212), the device (10) including a deflector (100) comprising a bar (110), the outside surface of which is adapted to deflect air flow so as to press the wiper blade against the surface to be wiped, the deflector (100) having a mounting portion which is pressed against the outside surface of one of the flanges (210) of the support member, the support member being provided with at least one retaining element (250) co-operating with said mounting portion so as to keep the deflector against said flange (210) of the support member, the device being characterized in that the mounting portion includes a strip (140) having a cut-out (150) which opens onto a free edge of said strip and in which said retaining element is engaged.

2. A windscreen wiper device according to claim 1, characterized in that said strip includes abutment means suitable for keeping the retaining element in engagement in said cut-out, said abutment means being resiliently deformable so as to allow the retaining element to be released from the cut-out.

3. A windscreen wiper device according to claim 1 or claim 2, characterized in that the retaining element (250) is a headed rivet.

4. A windscreen wiper device according to any of claims 1 to 3, characterized in that the strip (140) extends longitudinally over the entire length of the bar (110).

5. A windscreen wiper device according to any of claims 1 to 4, characterized in that the strip (140) is generally in the shape of an elongate plane plate having at its upper end an angled portion (142) which is connected to the inside surface (112) of the bar.

6. A windscreen wiper device according to any of claims 1 to 5, characterized in that the cut-out (150) is U-shaped and comprises an opening bounded by two rectilinear edges (151, 152) joined to a semi-circular base (153) which is suitable for bearing against said retaining element (250).

7. A windscreen wiper device according to any of claims 1 to 6, characterized in that the abutment means (160) includes at least one flexible tongue (160) which is substantially coplanar with said plane plate and the free end of which extends beyond said plane plate to form a protruding shoulder (166) suitable for butting against a free edge (215) of the support member (20).

8. A windscreen wiper device according to claim 7, characterized in that the upper portion of the plane plate includes resilient means (180) suitable for exerting restoring torque tending to keep the shoulders (166) in abutment with the free edge (215) of the support member (20).

9. A windscreen wiper device according to claim 8, characterized in that the resilient means (180) comprise at least one tongue (180) joined along one of its edges to the plane plate, the tongue making an angle to that plate when at rest and being suitable for resiliently flexing itself back towards the plane plate as it bears against the flange (210).

10. A deflector for fitting to a windscreen wiper device according to any one of claims 1 to 9.

## Patentansprüche

1. Scheibenwischanlage (10), bestehend aus einem Wischerarm und einem Wischerblatt, wobei wenigstens der Wischerarm oder das Wischerblatt eine Fassung (20) in Form eines Bügels mit einem Querschnitt in umgekehrter U-Form enthält, die zwei an einem Rückenteil (212) verbundene Seitenschenkel (210, 211) aufweist, wobei die Scheibenwischanlage (10) einen Windableiter (100) mit einem Profil (110) umfaßt, dessen Außenfläche die Luftströme so ablenken kann, daß das Wischerblatt an der zu wischenden Fläche angedrückt wird, wobei der Windableiter (100) einen Montageteil aufweist, der an der Außenfläche eines Schenkels (210) der Fassung angedrückt wird, die mit wenigstens einem Halteelement (250) versehen ist, das mit dem besagten Montageteil zusammenwirkt, um den Windableiter an dem besagten Schenkel (210) der Fassung festzuhalten, **dadurch gekennzeichnet,** daß der Montageteil eine Randleiste (140) mit einem Einschnitt (150) umfaßt, der an einer freien Kante des besagten Einschnitts mündet und in den das besagte Halteelement eingreift.

2. Scheibenwischanlage nach Anspruch 1 , **dadurch gekennzeichnet,** daß die besagte Randleiste Anschlagmittel umfaßt, um das Halteelement in dem besagten Einschnitt im Eingriff zu halten, wobei sich die besagten Anschlagmittel elastisch verformen können, um die Freigabe des Halteelements aus dem Einschnitt heraus zu ermöglichen.

3. Scheibenwischanlage nach Anspruch 1 oder 2 , **dadurch gekennzeichnet**, daß das Halteelement (250) ein Kopfniet ist.

4. Scheibenwischanlage nach einem der Ansprüche 1 bis 3 , **dadurch gekennzeichnet,** daß sich die Randleiste (140) in Längsrichtung über die gesamte Länge des Profils (110) erstreckt.

5. Scheibenwischanlage nach einem der Ansprüche 1 bis 4 , **dadurch gekennzeichnet,** daß die Randleiste (140) die allgemeine Form einer langgestreckten flachen Platte besitzt, die an ihrem oberen Ende einen gebogenen Teil (142) umfaßt, der sich an die Innenfläche (112) des Profils anschließt.

6. Scheibenwischanlage nach einem der Ansprüche 1 bis 5 , **dadurch gekennzeichnet,** daß der Einschnitt (150) die Form eines "U" mit einer Öffnung besitzt, die durch zwei geradlinige Kanten (151, 152) eingefaßt wird, die sich an einen halbkreisförmigen Boden (153) anschließen, der an dem besagten Halteelement (250) zur Anlage kommen kann.

7. Scheibenwischanlage nach einem der Ansprüche 1 bis 6 , **dadurch gekennzeichnet,** daß die Anschlagmittel (160) wenigstens eine biegsame Zunge (160) umfassen, die in etwa koplanar mit der besagten flachen Platte verläuft und deren freies Ende sich über die besagte flache Platte hinaus verlängert, um eine vorspringende Schulter (166) zu bilden, die an einer freien Kante (215) der Fassung (20) zum Anschlag kommen kann.

8. Scheibenwischanlage nach Anspruch 7 , **dadurch gekennzeichnet**, daß die flache Platte an ihrem oberen Teil elastische Mittel (180) umfaßt, die ein Rückstellmoment ausüben können, um die Schultern (166) an der freien Kante (215) der Fassung (20) in Anschlag zu halten.

9. Scheibenwischanlage nach Anspruch 8 , **dadurch gekennzeichnet,** daß die elastischen Mittel (180) wenigstens eine Zunge (180) umfassen, die sich durch eine Kante an der flachen Platte anschließt und in Ruhestellung einen Winkel im Verhältnis zu dieser bildet und die sich durch Auflage am Schenkel (210) elastisch zur flachen Platte umbiegen kann.

10. Windableiter zur Ausrüstung einer Scheibenwischanlage nach einem der Ansprüche 1 bis 9.
